# EUROPEAN PATENT APPLICATION

(11) **EP 2 249 296 A1**
(43) Date of publication of application: **10.11.2010**
(21) Application number: 10160146.6
(22) Date of filing: 16.04.2010
(51) Int. Cl.: G06Q 10/00

(54) **Information Management**

(30) Priority: 16.04.2009 US 212838 P
(71) Applicant: Mitel Networks Corporation, Ottawa, Ontario K2K 2W7 (CA)
(72) Inventor: Armstrong, Kenneth, Woodlawn Ontario K0A 3M0 (CA); Gray, Thomas, Fort Coulonge Québec J0X 1V0 (CA)
(74) Representative: Derry, Paul Stefan

(57) **Abstract**

A system and method for detecting events and in response to those events, generating scripting actions that can enable communications among participants within an organization. In one illustrative embodiment, these events can be informal such as impromptu meetings, document updates, presence detections, notifications and communications sessions, to name a few. Using these informal events, policies can be used to link issues to formal work through scripted actions. Often, these policies can be defined by a manager or the like. The policies can take advantage of a deontic task tree. Those skilled in the relevant art will appreciate that both formal and informal events can be processed and handled with the provided responses compatible with the current availability of resources with the organization.

## Description

### Reference to related applications

This application claims priority to U.S. Provisional Application Serial No. 61/212,838 titled PROXIMITY SCRIPTING which was filed on April 16, 2009 by Kenneth Armstrong and Thomas Gray, and is hereby incorporated in its entirety.

### Technical field

This application generally relates to managing information within an organization, and more particularly, to an intelligent business system that detects informal activities within the organization and provides responses to those activities.

### Background

In many organizations, managers work in highly unstructured and collaborative environments. Managers often guide their work with knowledge of the current situation within an organization. Their effort can be shaped by knowledge of the current contingencies of the organization with a view of the current resources that are available to address those contingencies. Current actions of a manager are chosen with a view to the combination of a current event within the organization and the availability of resources with which to meet it.

It has long been known in the art to be able to provide managers notifications and alerts of various events. These alerts can assist the manager in selecting their current activities. Calendar systems can be programmed to provide reminders of meetings shortly before they start and presence systems can be programmed to provide alerts about the arrival of visitors. Business intelligence systems can be programmed to determine specific kinds of behavior in the actions of competitors.

None of these systems, however, can link events on a continuous basis in which managers can define responses to. Furthermore, these systems are not tuned to informal activities that enable the work of an organization to detect events within these informal activities and to enable informal response to emergent events. A need therefore exists to provide a proximity scripting system and method that overcomes these challenges. The system should be able to detect events that pertain to informal events of an organization and to further enable a response to those events that is compatible with the current level of resources within the organization. Generally, the events are not part of a formal business process, but instead, can be emergent properties of the informal organizational work.

### Brief description of drawings

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:
FIGURE 1 is a block diagram representing an exemplary network for managing information in accordance with one aspect of the present application;
FIGURE 2 provides typical agents coupled to the exemplary network which can access information placed within shared memory to create information that crosses application boundaries;
FIGURE 3 represents an exemplary network with agents connected to each other removing the use of shared memory in accordance with one aspect of the present application;
FIGURE 4 depicts an illustrative block diagram showing a typical policy agent in accordance with one aspect of the present application;
FIGURE 5 illustrates a flow chart depicting exemplary processes for observing events and then scripting activities based on those events in accordance with one aspect of the present application; and
FIGURE 6 is an exemplary block diagram that shows an illustrative architecture used for operating the exemplary network in accordance with one aspect of the present application.

### Description of the application

The description set forth below in connection with the appended drawings is intended as a description of presently-preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the spirit and scope of this application.

### Overview

Generally described, the present application relates to communications, and more particularly, to a proximity scripting system and method whereby events can be detected and actions can be taken to enable communications among participants within an organization in response to those events. In one illustrative embodiment, these events can be informal business events such as impromptu meetings, document updates, presence detections, notifications and communications sessions. Using these informal events, policies can be used to link issues to scripted actions. Often, these policies can be defined by a manager or someone who is authorized to do so. Those skilled in the relevant art will appreciate that both formal and informal events can be processed and handled. The provided responses can be compatible with the current availability of resources with the organization.

Numerous advantages of the proximity scripting system and method will become apparent from the following discussion. As presented, proximity scripting is intended to facilitate the interactions of people concerned with activities in an organization. The system can provide a link between the informal and formal work of the organization. Managers can create policies that observe events caused by the formal business processes of the organization. The policies can couple the detection of these events to the creation of informal conference calls, notifications, etc. The system can also observe the informal work of the organization and make that available to others within the enterprise. For example, an informal meeting that accesses documents regarding an issue can be detected and reported to others so that they can ask to participate.

As will be shown below, a number of terms are used throughout this disclosure that can have a number of meanings. The term "manager" is not intended to limit the present application to specific job titles. Instead, the term is intended to cover participants in an organization who have an interest in observing and responding to events within it. Policies, which will be described below, can be set up by the managers. In embodiments presented herein, managers can be observers of information. In other embodiments, standard policies can be set up by the company by a network manger or the users can create the policies themselves.

The use of the term "enterprise" is not intended to limit the technology to commercial organizations. Enterprise, as intended by the present application, can encompass organizations in which participants function to achieve its ends. This can include private and governmental organizations. In one embodiment, these can function for profit, non-profit, philanthropic purposes and so on.

### Agents

Prior to the widespread computerization of business systems, work primarily took place on the enterprise in the physical domain. For example, a person who intended to use the enterprise would be provided with tools such as typewriters, filing cabinets, etc. The information generated from the enterprise would be processed using inter-office mailing systems to create, store and exchange work artifacts.

Today, however, these artifacts have now been reduced to computer-compatible media. Work artifacts can now be created, stored, exchanged, etc. within a network. With the advent of presence systems, which detect and make available the current status and location of the people within the enterprise, it can be said that significant factors in the work of an enterprise can be now represented within a network. These concepts within the network can also be extended through federation services to include the work of partner enterprises such as supply chains, customers, etc.

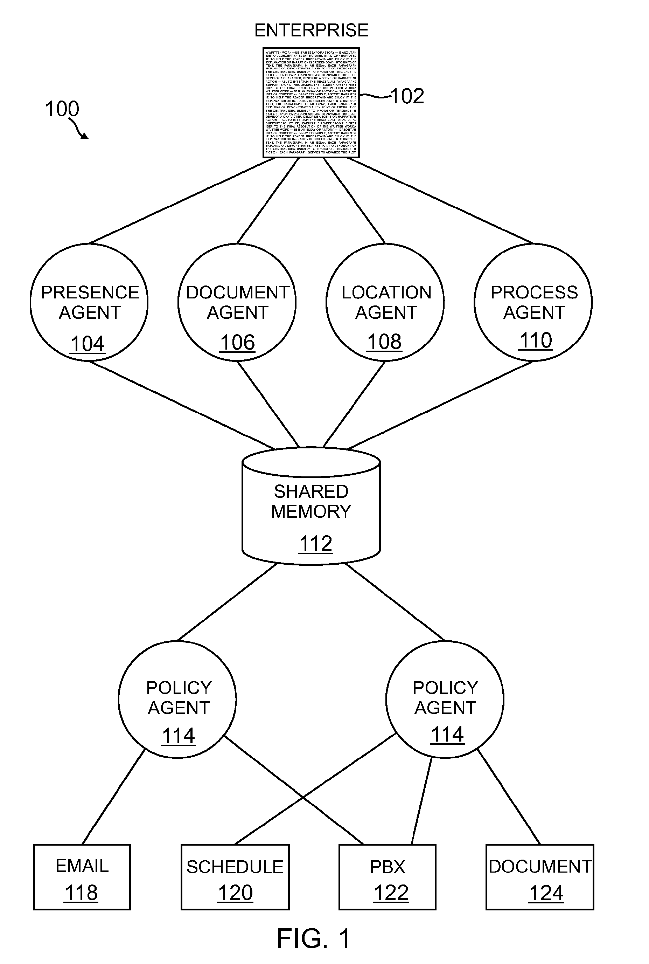

With reference now to FIGURE 1, a block diagram representing an exemplary network 100 for managing information in accordance with one aspect of the present application is provided. The network 100 shows the relationships of formal and informal activities within an enterprise 102 and processing those activities. While a number of components are provided within FIGURE 1, those skilled in the relevant art will appreciate that fewer or additional elements can be used.

The enterprise 100, as shown on the top portion of FIGURE 1, can maintain events, which can range from formal to informal. Separate databases can be used to delineate each. In one embodiment, the enterprise 100 can take the form of a server, which is known to those skilled in the relevant art. A number of protocols can be used that can allow the enterprise 100 not only to obtain data, but distribute it as well.

As shown in FIGURE 1, artifacts can be accessed and made available through agents 104, 106, 108 and 110. The agents 104, 106, 108 and 110 can interact with the enterprise 102 to detect current activities within the network 100. Numerous types of agents can be provided and those described below are for purposes of illustration and should not be construed as the only agents that can be used within the present application.

One agent, a presence agent 104, can be used to detect current contact information of a party within the enterprise 102. The contact information can include the party's residential phone number, office phone number, location, title, building, emergency contact information, etc. Those skilled in the relevant art will appreciate that there are numerous types of information that can be retrieved from the enterprise 102 by the presence agent 104 and the information described above was for purposes of illustration.

A document agent 106 can also be provided. The document agent 106 can interact with the enterprise 102 to determine which documents have been recently stored or checked out for modification. Modifications to documents can occur, for example, when a user saves a document. In turn, the document agent 106 can detect the save and report the save to an interested policy. In another example, when a spreadsheet is retrieved, the document agent 106 can thereafter gather information about this event so that interested parties can be alerted.

As shown in FIGURE 1, a location agent 108 can be provided. The location agent 108 can determine the location of a party within the organization. In one embodiment, the location of the party can be in the form of coordinates. Alternatively, the location can be more generally described, for example, as the user's house, office, etc.

A process agent 110 can also be provided. The process agent 110 can be used to maintain a view of the current business processes operating within the enterprise 102. The process agent 110 can also determine the state of these processes. The processes can be simple transactions such as logging in to the computer, answering a telephone call, use of an instant message program, etc. Known to those in the relevant art, numerous types of processes can be monitored by the process agent 110.

As shown above, the information extracted from the enterprise 102 usually takes the form of informal events. Nevertheless, in some embodiments, the information can include both formal and informal events. After the information is gathered by the agents 104, 106, 108 and 110, the information can be stored within shared memory 112, as shown in FIGURE 1. Typically, the shared memory 112 can provide access to the information to others, including other agents. The shared memory 112 can contain an image of the current activity within the enterprise 102. With suitable types and numbers of agents, the granularity of this representation can be made as fine as necessary.

The shared memory 112, as presented within FIGURE 1, can be in the form of a database. In one embodiment, the information provided by the agents 104, 106, 108 and 110 can be stored within the shared memory 112 as tuple spaces as described in U.S. Patent No. 7,415,104, which was assigned to Mitel Networks Corporation and is hereby incorporated by reference in its entirety. In one embodiment, data can be stored in the form of assertions that can be queried by other agents. The agents can gather information and convert it to a form that is compatible with the needs of other agents. Typically, each agent can create data in a form suitable to itself as long as the agents that are to use this data are aware of the form and the agents can be able to access and use it successfully.

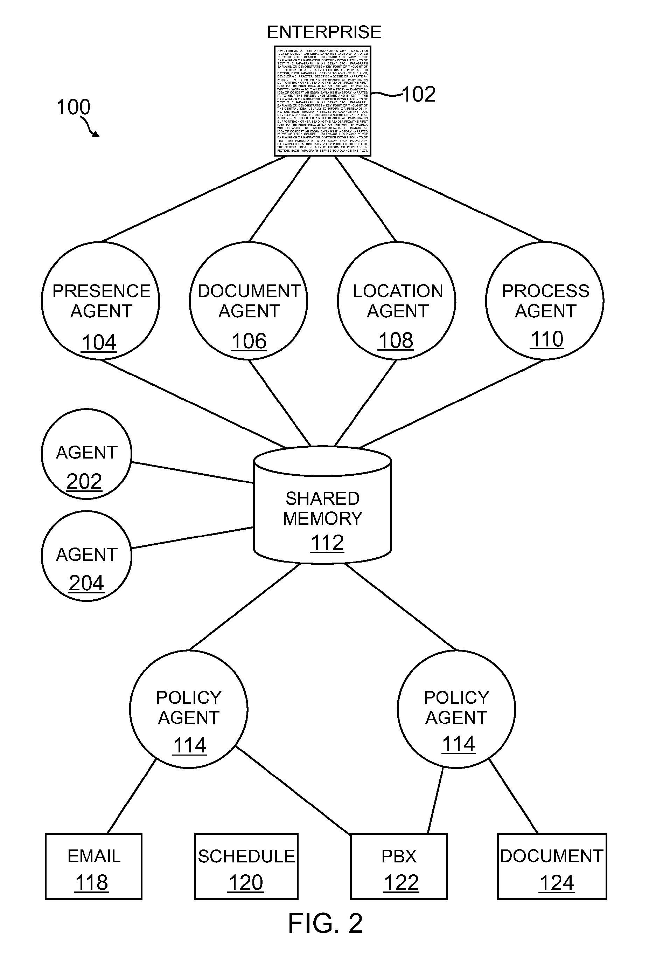

Previously, a set of agents 104, 106, 108 and 110 were shown that communicated with the enterprise 102 to monitor events. As provided for in FIGURE 2, a number of agents 202 and 204 can also be coupled to the exemplary network 100 to access information placed within shared memory 112 to create information that crosses application boundaries.

In one illustrative embodiment of information that crosses application boundaries, an agent 202 or 204 can be used to examine information stored by the present agent 104 and location agent 108. Using this information, the agent 202 or 204 can use the enterprise calendar and location services to determine that a specific group is in a meeting room and are discussing a certain topic. Alone, this determination generally cannot be made by any of the previously described agents 104, 106, 108 and 110. However, with the use of the information from the agents 104, 106, 108 and 110, the agent 202 or 204 can generate hybrid information. In one embodiment, the determination provided by the agent 202 or 204 can also include the people who are connected to the meeting via a conference call with information from an agent sensitive to PBX data.

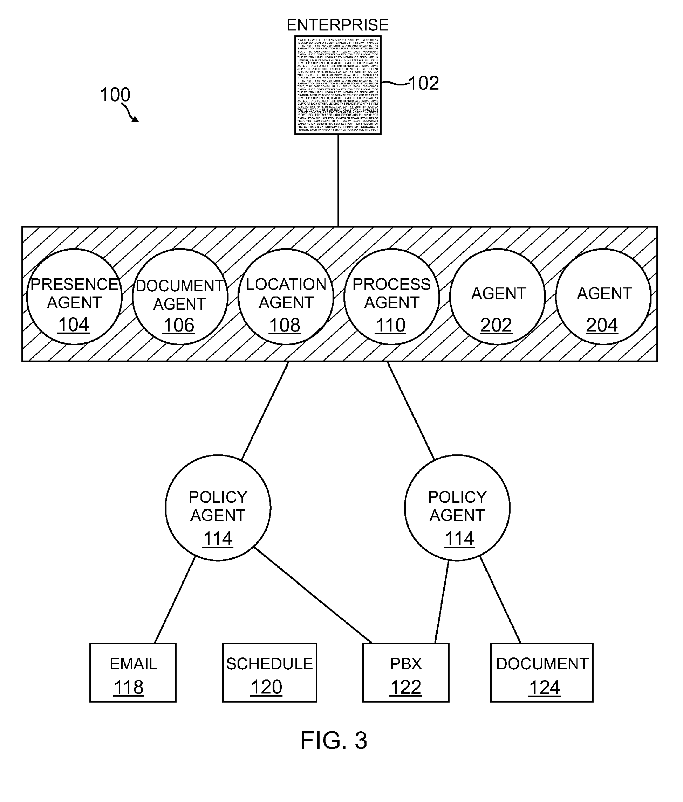

While in the previous illustration the agents 202 and 204 used shared memory 112 to retrieve the information and make determinations, the use of the shared memory 112, in some embodiments, is not used. FIGURE 3 represents an exemplary network 100 with agents 104, 106, 108, 110, 202 and 204 connected to each other removing the use of shared memory 112 in accordance with one aspect of the present application. Instead of agents communicating information with a shared memory 112, they can connect to each other directly, which is represented by the shading in FIGURE 3.

Generally, the shared memory 112 has the advantage of separating the issue of the acceptance of queries and the multicasting of results into a single entity. However, this is not absolutely necessary and the agents responsible for individual applications and cross application assessment can be access directly. As shown in FIGURE 3, one benefit of removing shared memory 112 is less components. However, the removal of the shared memory 112 often makes the connections between the agents 104, 106, 108, 110, 202 and 204 more difficult.

The previous discussion provided within FIGURES 1, 2 and 3 detailed how data was gather from the enterprise 102 through the use of agents 104, 106, 108, 110, 202 and 204. Represented below is how that information is used by policies.

### Policies

Returning to FIGURE 1, but also shown within FIGURES 2 and 3, the information within the enterprise 102 can be used for multiple purposes. The policy agents 114 shown can use the information to detect specific events within enterprise activity and to script responses to these events that can be of aid to the enterprise in general and the people within it.

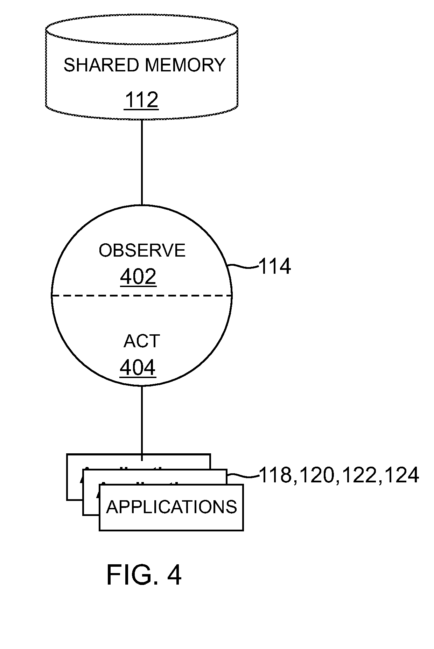

A policy system, such as that disclosed in U.S. Patent No. 7,522,710 ('710 Patent), which is assigned to Mitel Networks Corporation and is hereby incorporated by reference, can be a suitable exemplary system for the present application. FIGURE 4 depicts an illustrative block diagram showing a typical policy agent 114, which was defined in the '710 Patent.

In one embodiment, the policy agent 114 can include an observer portion 402 and an act portion 404. The observer portion 402 can typically be used to observe the activity within the enterprise 102. As shown, the observer portion 402 can interact with the shared memory 112. In the alternative, the observer portion 402 can interact with the agents 104, 106, 108, 110, 202 and 204 themselves. It can do this by subscribing to various types of information within the enterprise image.

The act portion 404 of the policy agent 114 can be used to script the behavior of applications 118, 120, 122, and 124 within the network 100. Typically this can be used to trigger the applications 118, 120, 122, and 124 that can facilitate communication between the people who participate in enterprise activities. This can include, but is not limited to, employees, contractors, customers, etc. However, these can also be used to create logs and other stored data which can be referenced by people at a later date. The scripts can be executed synchronously, semi-synchronously or asynchronously.

The '710 Patent discloses the representation and coordinated operation of policies through the facility of deontic task trees, which is hereby incorporated into the network 100 of the present application. As shown, the policy agent 114 can act to observe the world or to take action within it. Various operators are provided so that the operation of these policies can be coordinated. For example, operators can ensure that policies operate in parallel, in sequence, etc. With observers, the trees can ensure that certain events within the enterprise happened, did not happen, happened in a certain sequence, and so on. This can allow the policy agent 114 to detect the occurrence of certain enterprise events in a specified way. Thus, the policy agents 114 can be used to specify and to operate to detect enterprise events. This detection can be coupled in the deontic task tree to scripted actions that can be used to create communication sessions, conferences, notifications, logs, etc., between the people who make up the enterprise. They can be used to send emails containing specified information, schedule meetings and conference calls, etc. They can open and present documents to users.

A number of mechanisms can be provided so that managers can create their own policies to business events of interest to them and to indicate which actions they wish to happen in response to this detection. These policies can be set up by the managers themselves or by a system management function within the organization. One method by which this can be done is by use of structured English sentences. These structured sentences can be directly converted to policies. One example would be "For all meetings concerned with project XYZ, ask me if I wish to request permission to participate." A graphical user interface with drop down menus to create the structured choices can be used and are well known in the relevant art.

Other policies could be more direct such as "For all Emails concerned with Problem Report 3499, send copies to file www.example.com/urgentissue.txt. and forward them to me." Another could be "When John Smith arrives, alert him with file www.example.com/urgentissues.txt and create a conference call with a quorum of the problem Tiger Team." This example shows how the availability of enterprise resources can be specified. The conference call can be set up, if a quorum of a specified team is available. Strategies to deal with this can vary, if the quorum is not available immediately, the policy can fail and the originator notified. Alternatively, the conference could be delayed until the requisite quorum is available. Keywords can be supplied to indicate this. The keywords "immediate" and "when available" can be used to indicate the handling of resource issues in this case. Clauses to indicate actions on failure, timeout etc. can also be added to the structured sentence.

### Applications

Continuing with FIGURE 4, the scripted actions can be used to generate information for applications 118, 120, 122 and 124. These applications 118, 120, 122 and 124 represent only a small set of programs available to the user. The applications can include communication sessions, conferences, notifications, logs, etc., between the people who make up the enterprise. The applications can be used to send emails 118, schedule meetings and conference calls 120, interact with a private branch exchange 122, and send or retrieve documents 124.

### Processes

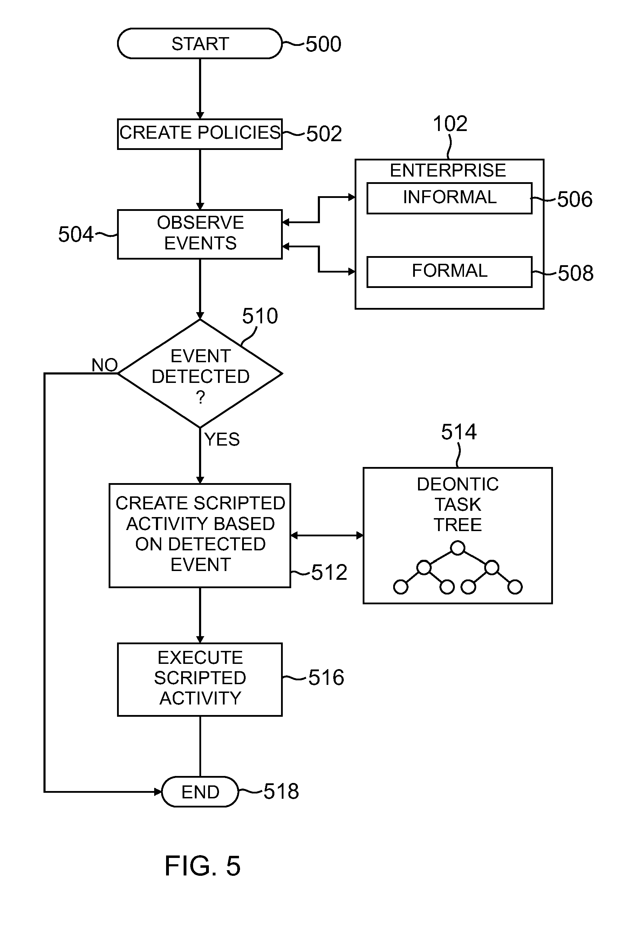

FIGURE 5 illustrates a flow chart depicting exemplary processes for observing events and then scripting activities based on those events in accordance with one aspect of the present application. The shown processes are for illustrative purposes and should not be construed as the only embodiment in which events are detected and actions are scripted. Those skilled in the relevant art will appreciate that the flow chart can include fewer or additional processes.

The processes can begin at block 500. At block 502, the network 100 can allow a user to create policies. These policies can be stored in a deontic task tree 514 as described in the '710 Patent. Typically, a manager or someone in a position thereof can generate the policies. Alternatively, a user of any caliber can set up the policies themselves. At block 504, the network 100 can observe events within an enterprise 102. These events can be informal 506 or formal 508 as represented in FIGURE 5.

At decision block 510, the network 100 can determine whether an event was detected. Those skilled in the art will appreciate that more than one event can be detected. When no event is detected, the processes end at block 518. Otherwise, and when an event has been detected, a scripted activity is created based on the detected event at block 512. The scripted activity can be retrieved from the deontic task tree described earlier at block 514. At block 516, the scripted can be executed. The script can be executed synchronously, semi-synchronously or asynchronously.

### Hardware Environment

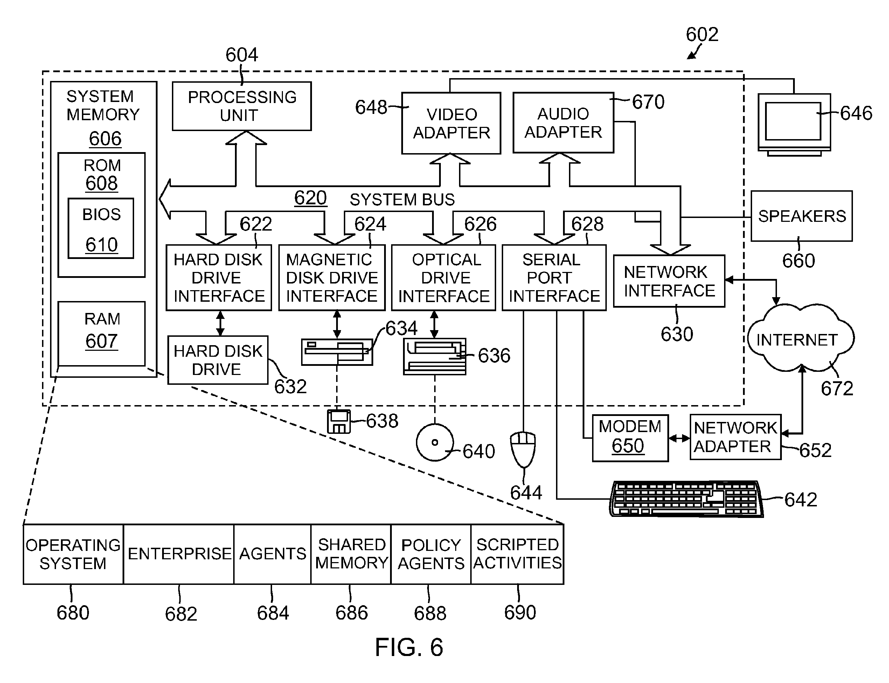

While the network 100 of the present application can be typically separated into distinct components, the network 100 can also be implemented on a general purpose computer 602 as shown in FIGURE 6. The hardware can include a processing unit 604, a system memory 606, and a system bus 620 that operatively couples various system components, including the system memory 606 to the processing unit 604. There can be only one or there can be more than one processing unit 604, such that the processor of computer 602 comprises a single central processing unit (CPU), or a plurality of processing units, commonly referred to as a parallel processing environment. The computer 602 can be a conventional computer, a distributed computer, a web server, a file server, a self-contained unit, and any other type of computer. Furthermore, those skilled in the relevant art will appreciate that the components provided within the network 100 can be distributed over many computer-like systems.

The system bus 620 can be any of several types of bus structures including a memory bus or memory controller, a peripheral bus, a switched fabric, point-to-point connections, and a local bus using any of a variety of bus architectures. The system memory 606 can also be referred to as simply the memory, and includes read only memory (ROM) 608 and random access memory (RAM) 607. A basic input/output system (BOIS) 610, containing the basic routines that help to transfer information between elements within the computer 602, such as during start-up, is stored in ROM 608. The computer 602 further includes a hard disk drive 632 for reading from and writing to a hard disk, not shown, a magnetic disk drive 634 for reading from or writing to a removable magnetic disk 638, and an optical disk drive 636 for reading from or writing to a removable optical disk 640 such as a CD ROM or other optical media.

The hard disk drive 632, magnetic disk drive 634, and optical disk drive 636 can be connected to the system bus 620 by a hard disk drive interface 622, a magnetic disk drive interface 624, and an optical disk drive interface 626, respectively. The drives and their associated computer-readable medium provide nonvolatile storage of computer-readable instructions; data structures, e.g., a catalog and a contextual-based index; program modules, e.g., a web service and an indexing robot; and other data for the computer 602. It should be appreciated by those skilled in the relevant art that any type of computer-readable medium that can store data that is accessible by a computer, for example, magnetic cassettes, flash memory cards, digital video disks, RAM, and ROM, may be used in the exemplary operating environment.

A number of program modules can be stored on the hard disk 632, magnetic disk, optical disk 636, ROM 608, or RAM 607, including an operating system 680, enterprise 682, agents 684, shared memory 686, policy agents 688, and scripted activities 690, which were described above. A user can enter commands and information into the personal computer 602 through input devices such as a keyboard 642 and pointing device 644, for example, a mouse. In one embodiment, policies can be set up through these input devices. Other input devices (not shown) can include, for example, a microphone, a joystick, a game pad, a tablet, a touch screen device, a satellite dish, a scanner, a facsimile machine, and a video camera. These and other input devices are often connected to the processing unit 604 through a serial port interface 628 that is coupled to the system bus 620, but can be connected by other interfaces, such as a parallel port, game port or a universal serial bus (USB).

A monitor 646 or other type of display device can also be connected to the system bus 620 via an interface, such as a video adapter 648. The monitor 646 can be in the form of a touch screen device removing the need for any input devices. In addition to the monitor 646, computers typically include other peripheral output devices, such as a printer and speakers 660, which can be connected via the audio adapter 670. These and other output devices are often connected to the processing unit 604 through the serial port interface 628 that is coupled to the system bus 620, but can be connected by other interfaces, such as a parallel port, game port, or a universal serial bus (USB).

The computer 602 can operate in a networked environment using logical connections to one or more remote computers. These logical connections can be achieved by a communication device coupled to or integral with the computer 602; the application is not limited to a particular type of communications device. The remote computer can be another computer, a server, a router, a network personal computer, a client, a peer device, or other common network node, and typically includes many or all of the elements described above relative to the computer 602, although only a memory storage device has been illustrated in FIGURE 6. Computer 602 can be logically connected to the internet 672. The logical connections can include a local area network (LAN), wide area network (WAN), personal area network (PAN), campus area network (CAN), metropolitan area network (MAN), or global area network (GAN). Such networking environments are commonplace in office networks, enterprise-wide computer networks, intranets and the Internet, which are all types of networks.

When used in a LAN environment, the computer 602 can be connected to the local network through a network interface or adapter 630, which is one type of communication device. When used in a WAN environment, the computer 602 typically includes a modem 650, a network adapter 652, or any other type of communications device for establishing communications over the WAN. The modem 650, which can be internal or external, is connected to the system bus 620 via the serial port interface 628. In a networked environment, program modules depicted relative to the personal computer 602, or portions thereof, can be stored in a remote memory storage device. It is appreciated that the network connections shown are exemplary and other means of and communications devices for establishing a communications link between the computers can be used.

The technology described herein can be implemented as logical operations and/or modules in one or more systems. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying system implementing the described technology. Accordingly, the logical operations making up the embodiment of the technology described herein are referred to variously as operations, steps, objects, or modules. Furthermore, it should be understood that logical operations can be performed in any order, unless explicitly claimed otherwise or a specific order is inherently necessitated by the claim language.

### Systems, Methods and Operations

In accordance with one aspect of the present application, a computer-implemented method for managing informal information within an organization is provided. The method can include detecting at least one event. In addition, the method can include generating at least one scripted action from the at least one event through a set of policies. The method can also include triggering the at least one scripted action.

In one embodiment, the at least one event can include an impromptu meeting, notification, or communication session. In one embodiment, detecting the at least one event can include identifying current activities within the organization. In one embodiment, identifying current activities within the organization can include determining whether documents have been recently stored or checked out for modifications. In one embodiment, identifying current activities can include detecting current contact information from associates within the organization. In one embodiment, identifying current activities can include determining locations of associates within the organization. In one embodiment, identifying current activities can include determining states of current business processes.

In one embodiment, the method can further include storing the current activities within shared memory. In one embodiment, the method can further include generating a combination of the current activities stored within the shared memory. In one embodiment, generating the at least one scripted action can include determining compatible resources available to the organization. In one embodiment, generating the at least one scripted action through the set of policies can include searching through a deontic tree. In one embodiment, triggering the at least one scripted action can include executing the scripted action synchronously, semi-synchronously or asynchronously.

In accordance with another aspect of the present application, a system is provided. The system can include at least one processor and a memory operatively coupled to the processor, the memory storing program instructions that when executed by the processor, causes the processor to run components. The system can run an activity component for storing informal data. In addition, the system can run an agent component for detecting at least one event in the informal data. The system can also run a policy component used to script responses to the at least one event.

In one embodiment, the system can run a second agent component for creating information from multiple events. In one embodiment, the second agent component can communicate directly with the agent component. In one embodiment, the second agent can convert the information to a compatible form for the policy component.

In accordance with yet another aspect of the present application, a management system is provided. The management system can include a server coupled to an enterprise. The server can include a database for storing policies, at least one processor, and a memory operatively coupled to the processor, the memory storing program instructions that when executed by the processor, causes the processor to perform processes. The processes can include observing at least one informal action from the enterprise. In addition, the processes can include identifying a policy from the database corresponding with the informal action. The processes can also include executing the policy.

In one embodiment, the policies can be defined by a manager. In one embodiment, the informal action can include a conference call or notification. In one embodiment, the policies can be defined by structured sentences.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A method for managing informal information within an organization comprising:
detecting at least one event;
generating at least one scripted action from said at least one event through a set of policies; and
triggering said at least one scripted action.

2. The method of claim 1, wherein said at least one event comprises at least one of impromptu meeting, notification, and communication session.

3. The method of claim 1 or 2, wherein detecting said at least one event comprises identifying current activities within said organization.

4. The method of claim 3, wherein identifying current activities within said organization comprises at least one of:
determining whether documents have been recently stored or checked out for modifications;
detecting current contact information from associates within said organization;
determining locations of associates within said organization; and
determining states of current business processes.

5. The method 3 or 4, further comprising storing said current activities within shared memory.

6. The method of claim 5, further comprising generating a combination of said current activities stored within said shared memory.

7. The method of any of the preceding claims, wherein generating said at least one scripted action comprises at least one of:
determining compatible resources available to said organization; and
searching through a deontic tree.

8. The method of any of the preceding claims, wherein triggering said at least one scripted action comprises executing said scripted action synchronously, semi-synchronously or asynchronously.

9. A system comprising:
at least one processor;
a memory operatively coupled to said processor, said memory storing program instructions that when executed by said processor, causes said processor to run:
an activity component for storing informal data;
an agent component for detecting at least one event in said informal data; and
a policy component used to script responses to said at least one event.

10. The system of claim 9, wherein said memory storing program instructions, that when executed by said processor, causes said processor to further run a second agent component for creating information from multiple events.

11. The system of claim 10, wherein:
said second agent component communicates directly with said agent component; and/or
said second agent component converts said information to a compatible form for said policy component.

12. A management system comprising:
a server coupled to an enterprise comprising:
a database for storing policies;
at least one processor;
a memory operatively coupled to said processor, said memory storing program instructions that when executed by said processor, causes said processor to:
observe at least one informal action from said enterprise;
identify a policy from said database corresponding with said informal action; and
execute said policy.

13. The management system of claim 12, wherein said policies are defined by a manager.

14. The management system of claim 12 or 13, wherein said informal action comprises a conference call or notification.

15. The management system of claim 12, 13 or 14, wherein said policies are defined by structured sentences.
